**Europäisches Patentamt**

**European Patent Office**

**Office européen des brevets**

(11) Veröffentlichungsnummer : **0 363 611 B1**

(12)
# EUROPÄISCHE PATENTSCHRIFT

(45) Veröffentlichungstag der Patentschrift :
**28.10.92 Patentblatt 92/44**

(51) Int. Cl.⁵ : **F16L 3/22, F24H 9/06, F24D 19/02**

(21) Anmeldenummer : **89115426.2**

(22) Anmeldetag : **22.08.89**

(54) **Halterung für Warmwasser-Heizungsrohre.**

(30) Priorität : **13.10.88 DE 3834864**

(43) Veröffentlichungstag der Anmeldung :
**18.04.90 Patentblatt 90/16**

(45) Bekanntmachung des Hinweises auf die
Patenterteilung :
**28.10.92 Patentblatt 92/44**

(84) Benannte Vertragsstaaten :
**AT BE CH DE IT LI LU**

(56) Entgegenhaltungen :
**DE-A- 2 715 394
DE-A- 2 819 411
DE-A- 3 043 449
DE-A- 3 506 397
DE-C- 3 511 006**

(73) Patentinhaber : **D.F. LIEDELT " VELTA"
PRODUKTIONS- UND VERTRIEBS-GMBH
Robert-Koch-Strasse 11
W-2000 Norderstedt (DE)**

(72) Erfinder : **Wenting, Manfred
Ochsenzoller Strasse 116
W-2000 Norderstedt (DE)**

(74) Vertreter : **von Raffay, Vincenz, Dipl.-Ing.
Patentanwälte Raffay & Fleck Postfach 32 32
17
W-2000 Hamburg 13 (DE)**

## Beschreibung

Die Erfindung betrifft eine Schwingbodenkonstruktion nach dem Oberbegriff des Patentanspruches 1.

Aus der DE-C-3 511 006 ist ein Fußbodenaufbau bekannt, bei dem es sich nicht um eine Schwingbodenkonstruktion handelt, sondern bei dem die Podestbohlen auf festen, zeitlichen Trägern oder Podestabschlüssen aufliegen. Unterhalb der Podestbohlen sind Wärmekammern gebildet, die nach unten durch eine Wärmedämmung aus Schaumkunststoffplatten begrenzt ist. In den Wärmekammern verlaufen ungefähr im Bereich der waagerechten Mittelebene die Heizungsrohre. Die Heizungsrohre sind mit Hilfe von Halterungen in form von Clips auf der Wärmedämmung befestigt. Die Öffnungen der Aufnahmen der Halterung liegen in Gebrauchslage nach oben, d.h. sie sind auf die Unterseite der Podestbohlen gerichtet. Beim Verlegen werden die Halterungen mit dem zu verlegenden Heizungsrohr verbunden und dann wird das Rohr in die Wärmekammer gelegt.

Aus der DE-A1-3 043 449 ist ein Bausatz für Fußbodenheizugen mit einer Halterung bekannt, die auf den Boden aufgelegt bzw. an einer Seitenwand befestigt wird. Diese Halterung liegt also unmittelbar auf dem Boden auf. Es sind Aufnahmen in Form von Clips vorhanden, in die die Heizungsrohre eingedrückt werden. In Funktionslage weisen die Öffnungen, in die die Heizungsrohre eingedrückt werden, nach oben, d.h. in Richtung auf die Fußbodenfläche oder die Wandabdeckplatten.

Bei Schwingböden für Sporthallen oder dergl. ist die Befestigung der bekannten Halterungen häufig nicht möglich oder schwierig, da die zur Dämmung verwendeten Werkstoffe eine fachgerechte Befestigung reicht zulassen. Es werden daher bei Schwingböden oftmals Metallrohre unterhalb des eigentlichen Schwingbodens verlegt, da diese Metallrohre ausreichend starr sind und keine Halterungen benötigen. Es sind aber besondere Lamellen erforderlich, die auf die Metallrohre aufgedrückt werden, um für einen Wärmeübergang an den Schwingboden zu sorgen. Diese Art der Fußbodenheizung ist aufwendig und verursacht entsprechende Kosten.

Der Erfindung liegt nun die Aufgabe zugrunde, eine Schwingbodenkonstruktion der eingangs genannten Art zu schaffen, die eine sichere und kostengünstige Verlegung von Kunststoffrohren ermöglicht und gleichzeitig für einen guten Wärmeübergang, d.h. für einen guten Wirkungsgrad beim Betrieb der Heizung sorgt.

Diese Aufgabe wird durch die Merkmarle von Anspruch 1 gelöst.

Die Schwingbodenkonstruktion nach der Erfindung weist Halterungen auf, die so ausgebildet sind, daß sie nach dem losen und provisorischen Einlegen der Kunststoffheizungsrohre in die Wärmekammer zwischen den ersten Schwingträgern auf die heizungsrohre von oben aufgesteckt werden können. Die heizungsrohre, vorzugsweise drei in gleichen Abständen nebeneinander, liegen dann nicht nur parallel nebeneinander und in einem gewünschten seitlichen Abstand von den Schwingträgern, sondern sie liegen auch ungefähr in der waagerechten Mittelebene der Wärmekammer, so daß sie allseits von der zu erwärmenden Luft umströmt werden können. Sie liegen nicht unmittelbar auf der Isolierung auf, sondern sie befinden sich, wie gesagt, ungefähr in der Mitte der Wärmekammer. Die Auflager ermöglichen eine leichte und nach den Abmessungen des Schwingbodens dimensionsgerechte Befestigung, gleichzeitig sichern sie die einmal verlegten Heizungsrohre nach der Fertigstellung des Schwingbodens, d.h. nach dem Anbringen der Blindbodenbretter und der auf diesen befindlichen weiteren Belägen.

In vorteilhafter Weise kann die Schwingbodenkonstruktion so ausgebildet sein, wie in den Ansprüchen 2 bis 5 angegeben.

Im folgenden wird die Erfindung unter Hinweis auf die Zeichnung anhand eines Ausführungsbeispieles näher erläutert.

Es zeigt:

Fig. 1 einen Schnitt durch einen Schwingboden, beispielsweise für eine Sporthalle, mit einer Halterung nach der Erfindung; und

Fig. 2 einen Teil einer Halterung, wie sie in Fig. 1 verlegt dargestellt ist, im vergrößerten Maßstab.

Die Halterung wird in einem Schwingboden für eine Sporthalle zum Einsatz gebracht, wie er grundsätzlich bekannt ist. Diese Schwingbodenkonstruktion besteht aus einem PVC-Oberbodenbelag 1, der auf einer Holzspanplatte 2 liegt, zwischen der Holzspanplatte 2 und Blindbodenbrettern 4 befindet sich eine PE-Folie 3. Die Blindbodenbretter 4 liegen auf parallel nebeneinander verlaufenden Schwingträgern auf, die durch eine Federbrettlage 5 gebildet werden, die wiederum auf Auffütterungsklötzen 6 liegen. Sog. Elastikpads 7 dienen der Abstützung der Auffütterungsklötze 6. Die Isolierung zum eigentlichen Boden erfolgt durch eine Mineralfaserschicht 8, die allseitig alukaschiert ist. Schließlich ist noch eine Feuchtigkeitssperre 9 vorhanden. Dieser Aufbau ist allgemein bekannt, so daß er nicht näher erläutert werden muß.

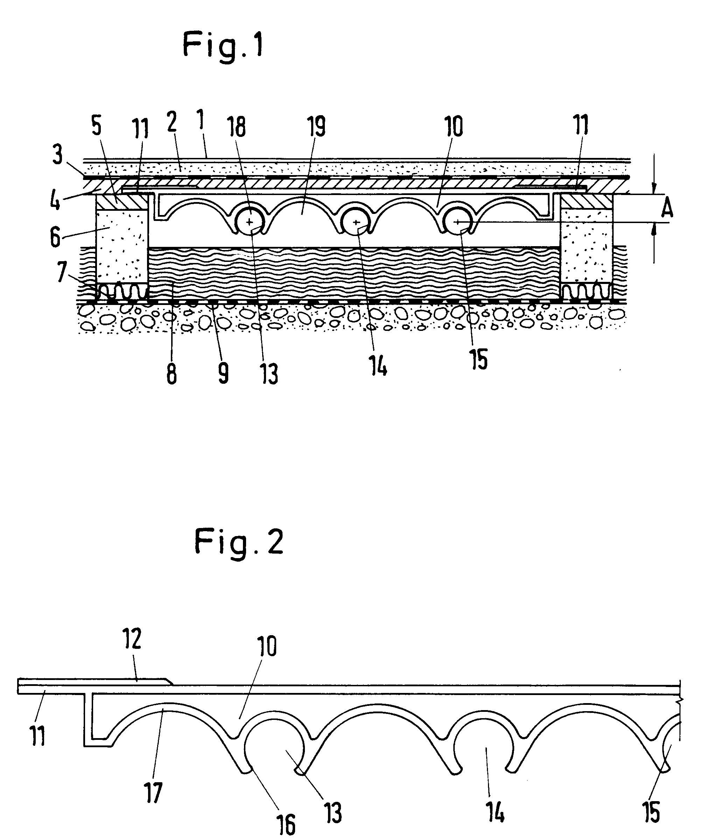

Zwischen den durch die Federbrettlage 5 und die Auffütterungsklötze 6 gebildeten Schwingträgern entsteht eine Wärmekammer 19, wie es beim Betrachten der Fig. 1 deutlich wird. Diese Wärmekammer 19 wird nach unten durch die Schicht 8 aus Mineralfaser und nach oben durch die Blindbodenbretter 4 begrenzt. Der seitliche Abstand zwischen den Blindbodenbrettern 4 auf den Auffütterungsklötzen 6 ist immer ungefähr gleich und liegt bei vielen in der Praxis vorkommenden Schwingbodenkonstruktionen bei 50 cm. Dieser Abstand wird durch die Halterung 10, 11, 12 aus Kunststoffmaterial überbrückt. Diese Halterung besteht aus einem mittleren Brückenabschnitt 10 und zwei seitlichen Auflagern 11. Wie beim Betrachten der Zeichnung deutlich wird, sind bei der dargestellten Ausführungsform drei Aufnahmen 13, 14 und 15 für Heizungsrohre 18 aus Kunststoff vorhanden. Die Aufnahmen sind im Querschnitt den Heizungsrohren 18 angepaßt. Nach unten sind sie offen und zwar durch sog. Einclipöffnungen 16. Die Dimensionierung des Querschnittes der Aufnahmen und die Größe der Einclipöffnung ist so gewählt, daß die Halterung mit einem gewissen Kraftaufwand auf das entsprechende Rohr aufgesteckt werden kann und dieses dann sicher hält, d.h ein einmal befestigtes Rohr kann nicht unbeabsichtigt nach unten wieder herausfallen.

Um die Halterung herum verläuft ein Versteifungsrand 17. Weiterhin sind im Bereich der Auflager 11 Verstärkungsstege 12 vorgesehen, die bis in den Bereich des Brückenabschnittes 10 hinein verlaufen.

Wenn die Heizungsrohre in einem vorbereiteten Schwingboden verlegt werden sollen, so werden diese lose in den Hohlraum, der die Wärmekammer 19 bildet, eingelegt. Es können dann von oben die Halterungen in einem bestimmten Abstand aufgesetzt werden, d.h. sie werden von oben auf die Rohre aufgedrückt.

Wenn die Rohre "eingeclipt" sind, werden die Auflager 11 auf die Schwingträger, d.h. auf die Federbrettlage aufgelegt. Im Anschluß daran kann der Schwingboden fertiggestellt werden.

Beim Betrachten der Fig. 1 wird deutlich, daß die Heizungsrohre aus Kunststoff ungefähr in der Mitte (Querschnitt) der Wärmekammer 19 liegen und einen konstanten gleichmäßigen Abstand zu den Schwingträgern aufweisen. Bei einer häufig vorkommenden Größenordnung beträgt der Abstand A von der Oberseite der Federbrettlage bzw. der Auflagefläche der Auflager 11 bis zur Achse der Heizungsrohre 3 bis 4 cm, d.h. die Wärmekammer hat eine Höhe von 6 bis 8 cm.

## Patentansprüche

1. Schwingbodenkonstruktion für Fußbodenheizungen mit parallel nebeneinander verlaufenden, Wärmekammern (19) bildenden, Schwingträgern (5,6) und mit Halterungen mit einer dem Querschnitt der Heizungsrohre (18) angepassten Aufnahme (13,14,15) in Form eines Clips, wobei die Mitten der Aufnahmen im Bereich der waagerechten Mittelebene der Wärmekammer liegen, dadurch gekennzeichnet, daß jede Halterung durch zwei seitliche Auflager (11) zum Auflegen auf jeweils zwei aneinanderangrenzende Schwingträger (5,6) aufweist, und daß die Auflager (11) durch einen Brückenabschnitt (10) miteinander verbunden sind, an dem mindestens eine Aufnahme vorgesehen ist, deren Öffnung (16) in Funktionslage nach unten gerichtet ist.

2. Schwingbodenkonstruktion nach Anspruch 1, dadurch gekennzeichnet, daß die Aufnahme oder die Aufnahmen (13, 14,15) symmetrisch zwischen den Auflagern (11) angeordnet sind.

3. Schwingbodenkonstruktion nach Anspruch 1 oder 2, dadurch gekennzeichnet, daß an dem Brückenabschnitt (10) drei Aufnahmen (13,14,15) mit nach unten gerichteten Einclipöffnungen (16) vorgesehen sind.

4. Schwingbodenkonstruktion nach einem oder mehreren der vorstehenden Ansprüche, dadurch gekennzeichnet, daß auf den Auflagern (11) Verstärkungsstege (12) vorgesehen sind, die bis in den Bereich des Brückenabschnittes (10) hinein verlaufen

5. Schwingbodenkonstruktion nach einem oder mehreren der vorstehenden Ansprüche, dadurch gekennzeichnet, daß um die Halterung herum verlaufend ein Versteifungsrand (17) vorgesehen ist.

## Claims

1. Vibrating floor construction for floor heating system with parallel juxtaposed vibrating carriers (5, 6) forming heat chambers (19) and with mounting supports having a receptacle (13, 14, 15) adapted to the cross-section of the heating pipes (18) in the form of a clip, the centres of the receptacles being located in the vicinity of the horizontal median plane of the heat chamber, characterized in that each mounting support has two lateral support members (11) for bearing on in each case two adjacent vibrating carriers (5, 6) and that the support members (11) are interconnected by a bridge section (10), on which at least one receptable is provided, whose opening (16) is downwardly directed in the operating position.

2. Vibrating floor construction according to claim 1, characterized in that the receptacle or receptacles (13, 14, 15) are arranged symmetrically between the support members (11).

3. Vibration floor construction according to claims 1 or 2, characterized in that on the bridge section (10) thee receptacles (13, 14, 15) are provided, the clipping openings (16) of which are directed downwardly.

4. Vibrating floor construction according to one or more of the preceding claims, characterized in that on the support members (11) are provided reinforcing webs (12), which extend into the vicinity of the bridge section (10).

5. Vibrating floor construction according to one or more of the preceding claims, characterized in that a reinforcing edge (17) is provided around the mounting support.

**Revendications**

1. Construction à sol vibré, pour chauffage de plancher, avec des poutres vibrantes (5,6), s'étendant parallèlement les unes à côté des autres, formant des chambres chaudes (19), et avec des supports comportant un réceptacle (13,14,15), adapté à la section transversale des tubes de chauffage (18), ayant la forme d'une attache, où les centres des réceptacles sont situés dans la zone du plan médian horizontal des chambres chaudes, caractérisée en ce que chaque support présente deux appuis (11) latéraux, en vue de la pose de chaque fois deux supports vibrés (5,6) limitrophes, et en ce que les appuis (11) sont reliés entre eux par une section de pontage (10), sur laquelle est prévu au moins un réceptacle, dont l'ouverture (16) est orientée vers le bas, dans la position de fonctionnement.

2. Construction à sol vibré selon la revendication 1, caractérisée en ce que le ou les réceptacles(s) (13,14,15) sont disposés symétriquement entre les appuis (11).

3. Construction à sol vibré selon la revendication 1 ou 2, caractérisée en ce que trois réceptacles (13,14,15) sont prévues sur la section de pontage (10), les ouvertures d'encliquetage lesquelles (16) orientées vers le bas.

4. Construction à sol vibré selon l'une ou plusieurs des revendications précédentes, caractérisée en ce que des nervures de renforcement (12), qui s'étendent en pénétrant jusque dans la zone de la section de pontage (10), sont prévues sur les appuis (11).

5. Construction à sol vibré selon l'une ou plusieurs des revendications précédentes, caractérisée en ce qu'est prévue une bordure de rigidification (17) qui s'étend autour de la fixation.

# Fig.1

# Fig.2